# EUROPÄISCHE PATENTSCHRIFT

(11) **EP 2 092 816 B1**
(45) Veröffentlichungstag und Bekanntmachung des Hinweises auf die Patenterteilung: **10.04.2019**
(21) Anmeldenummer: 09002110.6
(22) Anmeldetag: 16.02.2009
(51) Int. Cl.: A01D 34/416

(54) **Mulchkopf**
Mulch head
Tête de paillage

(30) Priorität: 19.02.2008 IT BZ20080006
(43) Veröffentlichungstag der Anmeldung: 26.08.2009
(73) Patentinhaber: Ladurner, Herbert, 39012 Merano (BZ) (IT)
(72) Erfinder: Ladurner, Herbert, 39012 Merano (BZ) (IT)
(74) Vertreter: Oberosler, Ludwig

(56) Entgegenhaltungen:
- WO-A-01/10188
- DE-A1- 4 411 002
- US-A- 4 077 190
- US-A- 5 065 567
- US-A1- 2006 254 060

## Beschreibung

Die Erfindung bezieht sich auf einen Mulchkopf eines Mulchgerätes oder Rodegerätes, welcher für die Grasvertilgung im Bereich zwischen den Baumreihen von Obst- oder Rebanlagen eingesetzt wird, wobei dieser mit einer parallel zur Bodenfläche, wesentlich horizontal rotierenden Welle für Fäden und einer Schutzabdeckung ausgestattet ist, wobei die Fäden radial angeordnet sind und auf der gesamten Wellenlänge verteilt sind.

Es sind Maschinen bekannt welche als Rode-, als Schösslingvertilge- oder als mechanische Unkrautvertilgegeräte bezeichnet werden und frontseitig oder rückseitig an Traktoren aufgebaut sind oder von einem, am Rücken der Bedienungsperson getragenen, Motor angetrieben werden.

Diese Maschinen nutzen die Wirkung der Fäden welche an der rotierenden Welle befestigt sind und die Tendenz haben sich durch die Fliehkraft radial anzuordnen um auf das Gras, das Unkraut, die Wurzelschösse und das Laubwerk aufzutreffen und diese zu zerschneiden und/oder zu zerkleinern, ohne dabei die Rinde der angebauten Kulturpflanzen wie Bäume, Reben oder dergleichen zu beschädigen.

Es sind auch Mulchgeräte bekannt welche, an Stelle der flexiblen Fäden aus Kunststoff, mit flexiblen Elemente aus eventuell mit Gewebe versehenem, Kunststoff oder Gummi an der parallel zum Boden rotierenden Welle ausgestattet sind.

Die bekannten Mulchgeräte haben den Nachteil, dass die Länge der an der parallel zu Boden rotierenden Welle befestigten Fäden oder flexiblen Elemente, infolge Abnutzung, nicht mehr die selbe Wirkung auf das Gras oder die Schösslinge ausüben, trotzdem dass die Bedienungsperson die Möglichkeit hat die Drehgeschwindigkeit der Welle und den Abstand zwischen der rotierenden Welle und dem Boden zu variieren um dadurch den, durch die Fliehkraft erzielten, Effekt der rotierenden flexiblen Elemente (flexiblen Fäden, Elemente aus Gummi) anzupassen. Diese Anpassungen können jedoch eine zu starke zerhackende Wirkung verursachen welche Beschädigungen an den Stämmen der Kulturpflanzen bewirken und/oder das Verstreuen des von Wurzeln durchwachsenen Erdreichs und/oder das nicht erwünschte Anhäufen von Erde zur Folge haben, bzw. können diese Anpassungen auch eine ungenügende Wirkung verursachen welche z.B. ein mangelhaftes, nicht andauerndes Mulchen mit Aufwickeln von Gras an der wesentlich horizontal rotierenden Welle und somit die Lahmlegung der Fäden bewirken, was häufiges Reinigen der Welle und Auswechseln der Fäden oder der rotierenden elastischen Elemente erfordert.

Aus der US 2006/0254060 A1 ist ein Mulchkopf mit wesentlich vertikal rotierender Welle bekannt dabei ist die Welle als Spule für die flexiblen Fäden ausgebildet und durch ein daran koaxial gelagertes Gehäuse überdeckt. Zwischen der Spule (Welle) und dem Gehäuse wirken federbelastete Eingriffelemente welche das Gehäuse in Bezug zur Spule gegen Verdrehung sichern. Das besagte Gehäuse ist stirnseitig (bodenseitig) von einem gewölbten Deckel verschlossen. Die Spule samt den aufgewickelten Fäden und dem Gehäuse mit Deckel werden von einem Motor in Drehung versetzt. Die Enden der beiden Fäden erstrecken sich über radiale Bohrungen in der Gehäusewand radial nach außen, sie nehmen bei Drehung der der Spule samt Gehäuse durch die Fliehkraft eine geradlinige radiale Position ein und schlagen, bei Auftreffen auf wesentlich vertikale Grashalme, diese ab. Infolge Verkürzung (Abnützung) der aus dem Gehäuse vorragenden Fäden, kann durch Tippen der Vorrichtung mit dem Gehäusedeckel gegen den Boden, die Sicherung gegen Verdrehung zwischen der Spule und dem Gehäuse kurz entriegelt werden wodurch die Fäden von der Spule etwas abgewickelt werden um weiter von der Gehäusewand abzuragen. Dieser Mechanismus ist bei Mulchköpfen mit wesentlich horizontaler Achse nicht anwendbar weil der Entriegelungsmechanismus nicht betätigbar wäre.

Aus der WO 01/10188 A1 ist ein weiterer Mulchkopf mit wesentlich vertikal rotierender Welle bekannt. Die Spule mit den Fäden ist verdrehbar, innerhalb eines koaxialen Gehäuses, gelagert. Durch axiales Verschieben der Spule innerhalb des Gehäuses kann die Spule entriegelt werden und sich, gegenüber dem Gehäuse, verdrehen wodurch die Fäden abgespult werden und durch die Bohrungen am Gehäuse austreten können. Ein derartiger Nachstellmechanismus ist für die Mulchköpfe mit einer größeren Anzahl von Fäden kaum funktionstüchtig, weiter ist die Mechanik aufwändig und störungsanfällig wenn sie mit feinem sand, Staub und Pflanzenresten in Berührung kommt.

Aus der DE 4411002 A1 ist ein Mulchkopf mit vertikal drehender Achse bekannt in welchem die Spule für die Fäden innerhalb eines angetriebenen Gehäuses verdrehbar gelagert ist Zwischen dem Gehäuse und der Spule wirkt ein am Gehäuse radial verschiebbarer Schieber mit zentralem von der Welle durchdrungenem Langloch welcher in einem der Spule zugewandtem Endbereich mit einem Nocken versehen ist welcher sich seitlich gegen einen von der Stirnseite der Spule abragenden Anschlag abstützt. Der besagte Schieber gibt, sobald sich infolge höherer Drehzahl des Gehäuses bei Verkürzung der freien Enden der Fäden erhöht und die auf den Schieber wirkende Fliehkraft zunimmt, frei. Dieser Nachstellmechanismus für die Fäden funktioniert kaum bei Mulchköpfen mit einer größeren Anzahl von Fäden deren Abnutzung und somit vom Gehäuse vorstehende Länge zuweilen sehr unterschiedlich ist. Weiter ist die Funktionstüchtigkeit des Mechanismus sehr von der Gleitfähigkeit des Schiebers zwischen den Führungen am Gehäuse abhängig. Der Mechanismus ist ungeeignet für Mulchköpfe mit wesentlich horizontal drehender Welle weil in diesem Fall die Fäden, die zu bearbeitenden Pflanzenmasse nicht quer zu den Stengeln oder Halmen bearbeitet sondern wesentlich in Längsrichtung und weil zusätzlich die Fadenenden häufig auch auf dem Boden auftreffen.

Sämtliche in den obgenannten Dokumenten gezeigten Mulchköpfe sind als sogenannte "Rasentrimmer" ausschließlich für das Bearbeiten von Rasenflächen mit stehenden Grashalmen geeignet, ein Zerkleinern und Streuen der geschnittenen Pflanzen findet nicht statt. Die quer zu den Stengeln arbeitenden Schneidfäden würden bei Auftreffen auf die Stengel oder Stämme der Kulturpflanzen diese beschädigen.

Aus der US 4,077,190 ist eine Mulchvorrichtung mit parallel zur Bodenfläche rotierender Welle bekannt, wobei die Welle samt den flexiblen Mulchelementen (Lederriemen) im oberen Bereich durch eine Schutzhaube abgedeckt sind. Diese Schutzhaube wird von den Enden der rotierenden Elemente nicht berührt und sie ist auch nicht gegenüber der Welle verstellbar sondern zusammen mit dieser höhenverstellbar, also ohne dass sich dabei der Abstand zur Welle verändern würde. An der Vorderkante dieser Schutzhaube sind, sich nach hinten erstreckende Kufen vorgesehen. Die Arbeitsweise der Mulchelemente kann ausschließlich durch das Verändern des Abstandes der Welle vom Boden und durch Verändern der Drehzahl beeinflusst werden

Die Erfindung stellt sich die Aufgabe einen Mulchkopf zu schaffen welcher eine wesentlich parallel zum Boden rotierende, mit flexiblen Fäden aus Kunststoff bestückte, Welle aufweist und an einem Mulchgerät der eingangs genannten Art anbringbar ist, wobei dieser Mulchkopf für die Ausführung unterschiedlicher Arbeiten, insbesondere im Bereich unter den Pflanzenreihen von Obst- oder Rebanlagen, geeignet ist, welche unterschiedliche Wirkungen der von der Welle bewegten Fäden erfordern, ohne die Kulturpflanzen zu beschädigen, ohne häufige Reinigungsarbeiten an der Welle oder den häufigen Austausch der Fäden durchführen zu müssen, wodurch eine schnelle pausenlose Bearbeitung von großen Kulturflächen möglich ist.

Zur Lösung dieser Aufgabe schlägt die Erfindung einen Mulchkopf mit den Merkmalen des Anspruchs 1 vor.

Der erfindungsgemäße Mulchkopf mit fadenbestückter rotierender, mit erfindungsgemäßer Schutzabdeckung versetiener wesentlich horizontaler Welle, ist auf bekannte Art einseitig oder beidseitig, frontseitig oder rückseitig an einem selbstfahrenden Fahrzeug angebracht. Der Mulchkopf ist in einer Ebene parallel zur Bodenfläche horizontal schwenkbar um während der Fahrt durch die Reihen, den Stämmen der Kulturpflanzen ausweichen zu können, weiters ist er gemäß einer vertikalen Ebene schwenkbar um, zur Fläche auf welcher sich die Maschine bewegt, eine mehr oder weniger angewinkelte Position einnehmen zu können und so geneigte Flächen, z.B. in Rebanlagen und in Hügellagen, bearbeiten zu können, bzw. um eine wesentlich vertikale Transportposition einnehmen zu können.

Die Erfindung schließt nicht den Aufbau des erfindungsgemäßen Mulchkopfes auf spezifische selbstfahrende Maschinen oder auf Maschinen welche von der Bedienungsperson geschoben oder getragen werden, aus.

In allen Fällen muss die Halterung und der Antrieb des erfindungsgemäßen Mulchkopfes derart gestaltet sein, dass die Veränderung des Abstandes der rotierenden Welle zur Bodenfläche, die Veränderung des Abstandes zur Reihe der Kulturpflanzen, die Veränderung der Drehzahl der mit Fäden bestückten Welle, die Veränderung der Fahrtgeschwindigkeit und die Veränderung der Neigung der mit Fäden bestückten Welle zur Ebene auf welcher sich die Maschine fortbewegt, möglich sind.

Die erfindungsgemäße Vorrichtung zum Nachstellen der Fäden besteht wesentlich aus einem Rohr welches die gesamte rotierende Welle abdeckt und an diesem drehbar so gelagert ist, dass zwischen Welle und Rohr ein Zwischenraum entsteht. Zwischen Welle und Rohr ist ein Freilaufmechanismus vorgesehen welcher die Drehung des Rohres in die selbe Richtung der Rotation der Welle ermöglicht während eine Drehung in Gegenrichtung verhindert wird. Die Welle ist mit einer Reihe, vorzugsweise gleich beabstandeter, Querbohrungen versehen welche in einer selben, die Drehachse beinhaltende Ebene angeordnet sind. Das Rohr welches die Welle abdeckt und drehbar an dieser koaxial gelagert ist, ist mit zwei Reihen von Buchsen ausgestattet durch welche sich die, an der innenliegenden Welle festgelegten, Fäden frei erstrecken. Diese zwei Reihen von Buchsen sind gemäß zwei in entgegengesetzter Position angeordneter Längslinien vorgesehen welche den Positionen der Querbohrungen an der Welle entsprechen.

Die elastischen Fäden entsprechen numerisch der Anzahl der Querbohrungen an der Welle und jeder dieser Fäden hat die mehrfache Länge bezogen auf die in Arbeitsposition von der Rotationsachse der Welle maximal abstehenden radialen Länge. Das Anbringen der Fäden geschieht indem die einzelnen Fäden mit einem Ende durch die entsprechenden Führungsbuchsen an einer Längsseite des, die Welle abdeckenden, Rohres hindurch eingefädelt werden um sie anschließend durch die entsprechenden Querbohrungen an der Welle hindurchzuführen und schließlich durch die entsprechenden Führungsbuchsen an der entgegengesetzten Seite des Rohres hindurchzuführen. Jeder der eingefädelten Fäden wird anschließend angezogen und so gespannt gehalten, dass beide entsprechenden Enden zusammentreffen so dass der Mittelbereich des Fadens sich im Bereich der Querbohrung an der Welle befindet. Durch anschließendes Entriegeln oder Umschalten des Freilaufmechanismus welcher zwischen Welle und dem darauf koaxial gelagerten Rohr wirkt und durch Drehen der fadenbestückten Welle des Mulchkopfes in die selbe Richtung welche für das Arbeiten des Mulchkopfes vorgesehen ist, wird das Aufwickeln der Fäden an der Welle, im Inneren des Rohres durchgeführt, bis die Enden der flexiblen Fäden außen aus den am Rohr vorgesehenen Führungsbuchsen um eine Länge vorstehen welche für die Durchführung von beispielsweise Rodearbeiten, Mulcharbeiten oder Schösslingsvertilgungsarbeiten geeignet ist.

Der erfindungsgemäße Mulchkopf ermöglicht, nach erfolgter Verkürzung der Fäden durch Abnützung, das automatisierte Nachstellen der Fäden indem einfach der Mulchkopf vom Boden angehoben wird und die Drehung der fadenbestückten Welle verlangsamt, bzw. angehalten, wird wodurch erreicht wird dass das in Drechrichtung der Welle frei verdrehbare Rohr sich durch Massenträgheit, in Bezug auf die Welle, um einen mehr oder weniger großen Winkel gegenüber der Welle verdreht, wodurch das Abwickeln einer entsprechenden Länge der einzelnen Fäden erfolgt welche durch Fliehkraft durch die entsprechenden am Rohr vorgesehenen Führungsbuchsen herausgezogen werden. Natürlich hängt die Ausziehlänge der Fäden wesentlich von der Drehgeschwindigkeit der fadenbestückten Welle und von der mehr oder weniger schroffen Verlangsamung, bzw. dem Anhalten, der fadenbestückten Welle und von der Masse des Rohres samt den Führungsbuchsen, ab.

Die Praxis hat gezeigt, dass die zerfetzende Wirkung der durch die Welle bewegten Fäden an bekannten Mulchgeräten von verschiedenen bekannten Faktoren abhängt und zudem von Faktoren abhängt welche nur am erfindungsgemäßen Mulchkopf veränderbar und anpassbar sind. Natürlich können an allen Mulchgeräten Fäden oder flexible Elemente angebracht werden welche unterschiedliche mechanische Eigenschaften und Maße aufweisen, es ist weiters der Abstand zur Bodenfläche einstellbar, es ist die Fahrgeschwindigkeit veränderbar und es ist die Drehzahl der fadenbestückten Welle veränderbar. Am erfindungsgemäßen Mulchkopf ist, außer den oben angeführten Änderungen, die Länge der Fäden veränderbar um deren Verkürzen durch Abnutzung auszugleichen oder um eine besondere Wirkung, z.B. gegenüber dem Gras, den Kulturpflanzen oder dem Boden, zu erzielen. Weiters besteht die Möglichkeit durch Verändern der Position der Schutzabdeckung zur Drehachse und durch Verändern der Position der Austrittskante der besagten Schutzabdeckung bezogen zur Bodenfläche die "Austritts- und Auftreffgeometrie" der Fäden zu verändern und zwar im Sinne dass diese aggressiver wirken indem sie vorwiegend wie bekannt mit den Enden oder den "Spitzen" auftreffen oder auch, bzw. vorwiegend, mit einem mehr oder weniger langem Endbereich des Fadens auftreffen wodurch eine weniger aggressive Wirkung entsteht.

Natürlich kann die Maschine, das Fahrzeug oder die Vorrichtung auf welcher der erfindungsgemäße Mulchkopf aufgebaut ist alle bekannten Merkmale betreffend die Halterung, den Antriebs, die Einstellung und die Sicherheitsvorkehrungenen für daran aufgebaute Mulchköpfe aufweisen.

Die Erfindung wird anschließend anhand eines in den beigelegten Zeichnungen schematisch dargestellten vorzuziehenden Ausführungsbeispieles eines erfindungsgemäßen Mulchkopfes näher erklärt, dabei erfüllen die Zeichnungen rein erklärenden, nicht begrenzenden Zweck.

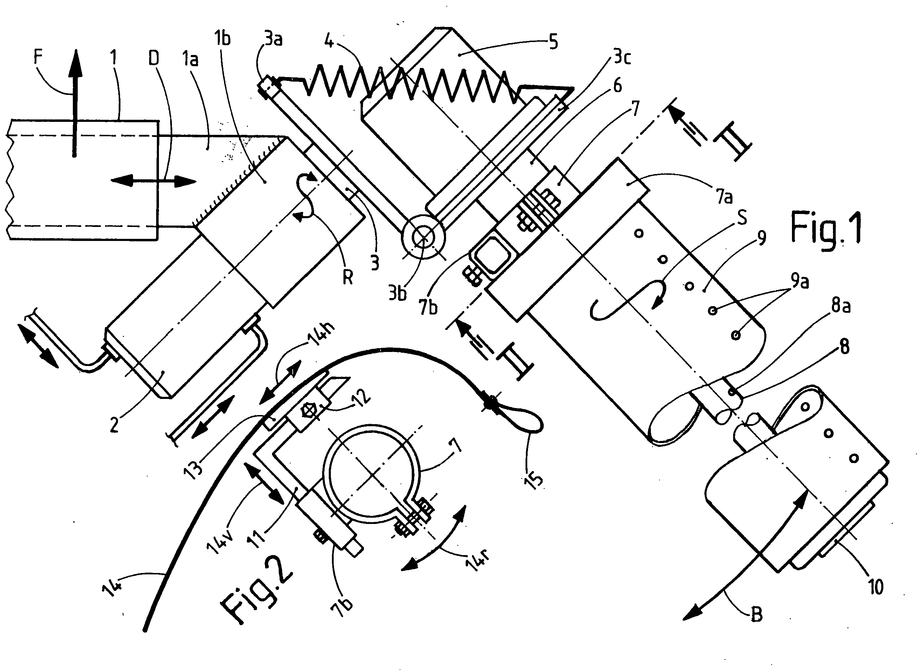

Die Fig. 1 zeigt die Draufsicht auf einen erfindungsgemäßen Mulchkopf ohne Fäden und ohne Schutzabdeckung.
Die Fig. 2 ist die Vorderansicht auf die Halterung der Schutzabdeckung gemäß der in Fig. 1 gezeigten Ebene II-II.

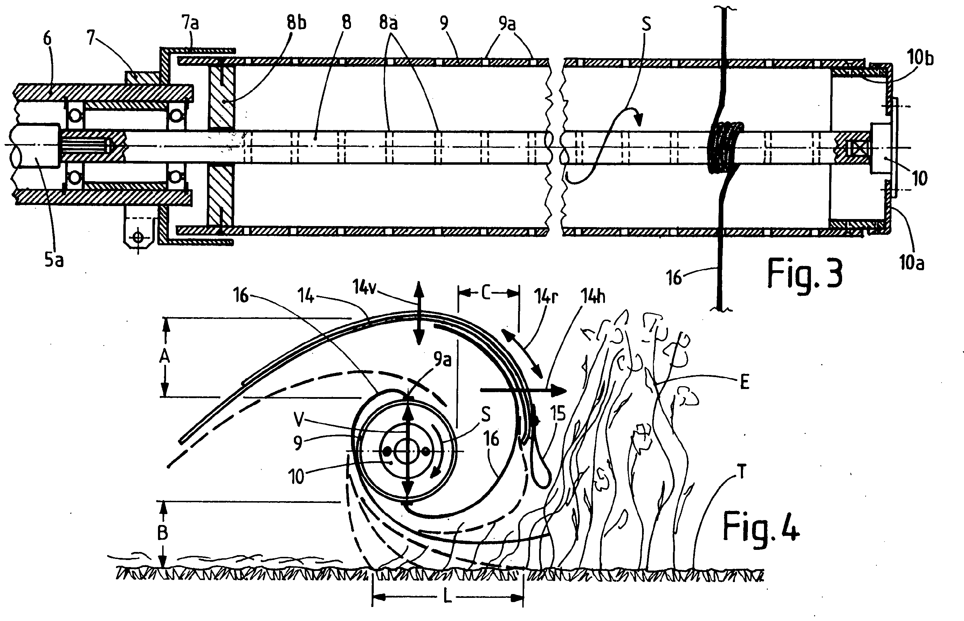

Die Fig. 3 zeigt im Längsschnitt den erfindungsgemäßen Mulchkopf ohne Schutzabdeckung und mit nur einem flexiblen Faden.

Die Fig. 4 zeigt die Vorderansicht auf das freie Ende des erfindungsgemäßen Mulchkopfes mit schematischer Darstellung des flexiblen Fadens während der unterschiedlichen Drehpositionen der fadenbestückten Welle.

An einem Träger 1 welcher auf einem Fahrzeug welches sich in Richtung F bewegt aufgebaut ist, ist seitlich ausziehbar D, ein Arm 1a vorgesehen welcher am äußeren Ende einen Mechanismus 1b trägt welcher durch einen Hydraulikkolben 2 betätigt wird um eine Drehung R des Flansches 3, 3a zu erreichen welcher an einer Seite mit einem Scharnier 3b mit wesentlich senkrechter Achse für die schwenkbare B Halterung einer Lagerplatte 3c versehen ist an welcher, an einer Seite ein Hydraulikmotor 5 und an der Gegenseite der Mulchkopf befestigt ist welcher wesentlich aus einer Welle 8 für Fäden, aus einem Rohr 9 welches diese Welle abdeckt und verdrehbar koaxial auf dieser gelagert ist und aus einer Schutzabdeckung 14 mit vorderer Stoßkante 15 besteht. Die Lagerplatte 3c wird von einer Zugfeder 4 in Richtung des verdrehbaren R Flansches 3a gezogen um, infolge Ablenkung B des Mulchkopfes 8, 9 wegen Auftreffen auf den Stamm einer Kulturpflanze, die Rückstellung in Arbeitsstellung, zwecks Bearbeitung zwischen den Stämmen einer Reihe von Kulturpflanzen, durchführen zu können. Der gesamte Lagermechanismus 1, 1a, 1b, 3a, 3c ist, bezogen auf die Bodenfläche T, vertikal verstellbar V.

An der Nabe 6 des Motors 5 welche über die Lagerplatte 3c hinausragt ist innen die fadenbestückte Welle 8 eingesetzt und drehbar S gelagert. An der selben fadenbestückten Welle 8 ist drehbar und koaxial zu dieser Welle ein Rohr 9 gelagert welches Bohrungen 9a aufweist welche eventuell mit Buchsen versehen sind und entlang zweier, diametral entgegengesetzter, Geraden angeordnet sind so dass diese Bohrungen 9a am Rohr 9, den durchgehenden Bohrungen 8a an der Welle 8 entsprechen. Das Rohr 9 ist innen am, der Nabe 6 zugekehrten, Ende mit einer Lagerscheibe 8b versehen welche am Rohr 9 befestigt ist und auf der Welle 8 verdrehbar ist während am entgegengesetzten Ende das Rohr 9 mit einer Buchse 10b und einem Abdeckelement 10a versehen ist an welchem ein Freilaufmechanismus 10 gelagert ist welcher auf das Ende der Welle 8 aufgesteckt ist. Dieser Freilaufmechanismus 10 ist vorzugsweise von der Art mit umschaltbarer oder entriegelbarer Freilaufrichtung.

Durch Einfädeln der flexiblen Fäden 16 durch die verschiedenen Bohrungen 9a hindurch welche am Rohr 9 vorgesehen sind und welche den Bohrungen 8a an der Welle 8 entsprechen ist, infolge Entriegelung oder Umschaltung der Arretierwirkung des Freilaufmechanismus 10, durch Drehen S der Welle 8 das Aufwickel der Fäden 16 möglich, bis die Enden der Fäden um eine geeignete Länge abragen welche geeignet ist eine bestimmte Bearbeitungsart durchzuführen.

An der Nabe 6 des Motors 5 des Mulchkopfes ist ein Befestigungsring 7 angebracht welcher verdrehbar 14r ist und eine Halterung 7b für einen verstellbaren 14v Winkel 11 aufweist, dieser ist mit einem verschiebbaren 14h Element 12 mit Trägerstruktur 13 für eine Schutzabdeckung 14 ausgestattet. Die besagte Schutzabdeckung erfüllt erfindungsgemäß nicht nur den Zweck die Wirkung der Fäden während der verschiedenen Bearbeitungen abzuschirmen, sondern hat die Aufgabe, aufgrund der durchzuführenden Bearbeitungsart und der erwünschten Aggressivität, die Wirkungsgeometrie der wesentlich unter Fliehkraft arbeitenden Fäden 16 zu verändern. Durch Verändern 14v des Abstandes A und/oder durch Verändern 14h des Abstandes C zwischen dem Rohr 9 und der Schutzabdeckung 14 und/oder durch Verändern 14r der Position der Austrittskante der Schutzabdeckung 14 ist es möglich die Wirkungsgeometrie der Fäden 16 und das Ausmaß des Wirkungsbereiches L der Fäden zu beeinflussen wodurch die Wirkungsaggressivität beachtenswert verändert wird.

Ein wichtiges Merkmal des Mulchkopfes besteht darin dass die Länge der flexiblen Fäden 16, infolge Ihrer Kürzung durch Abnutzung, wieder auf ihr ideales Maß gebracht werden kann indem einfach der Mulchkopf vom Boden T angehoben wird und indem die Drehung S der fadenbestückten Welle 8 mehr oder weniger schroff verlangsamt, bzw. blockiert, wird wodurch erreicht wird dass das Rohr 9 durch Massenträgheit sich weiter dreht wobei ein Abwickeln der Fäden 16 von der Welle 8 erfolgt.

Natürlich ist die Einstellung der Abstände A, C und die Verstellung 14r der Schutzabdeckung 14 im Verhältnis zur fadenbestückten Welle 8 mit Rohr 9 auch mittels anderer Halterungen und Einstellelementen als der dargestellten möglich.

## Patentansprüche

1. Mulchkopf bestehend aus einer zur Bodenfläche (T) parallelen, mit einer Reihe von flexiblen, voneinander beabstandeten Fäden (16) bestückten Welle wobei die Fäden an der Welle (8) aufgewickelt sind und von einem an der Welle koaxial gelagertem zylindrischen Gehäuse abgedeckt sind,
wobei die jeweiligen Fadenenden sich durch radiale Bohrungen oder Buchsen (9a) am besagten Gehäuse nach außen erstrecken und bei Rotation der Welle durch die Fliehkraft eine radiale Stellung einnehmen und weiters bestehend aus einer Schutzabdeckung (14), **dadurch gekennzeichnet, dass** das besagte zylindrische Gehäuse ein Rohr (9) ist welches mittels einem Freilaufmechanismus (10) auf der Welle (8) verdrehbar gelagert ist, und dass dieser Freilaufmechanismus (10), zwecks Aufwickeln der Fäden (16) an der Welle (8) innerhalb des Rohres (9), entriegelbar oder umschaltbar ist, dass die Schutzabdeckung (14) außerhalb der fadenbestückten Welle (8) samt koaxial überdeckendem Rohr (9) vorgesehen ist, wobei die Schutzabdeckung (14), zwecks Veränderung der Austritts- und Auftreffgeometrie der Fäden (16) und deren Wirkungsbereich (L) auf den Bewuchs (E), derart verstellbar ist dass wesentlich vertikal (14v) der Abstand (A) zum Rohr (9) und wesentlich horizontal (14h) der Abstand (C) zwischen dem Rohr (9) und der Austrittskante (15) der Schutzabdeckung (14) veränderbar ist, und/oder dass die Schutzabdeckung (14), in Bezug auf die Drehachse der fadenbestückten Welle (8), drehbar gehaltert ist so dass die Position der Austrittskante (15) der Schutzabdeckung (14) zur Anordnung der Fäden (16) und in Bezug auf die Bodenfläche (T) verändert werden kann.

## Claims

1. A mulcher head, comprising a shaft parallel to a ground surface (T), and equipped with a series of flexible, spaced apart threads (16), wherein said threads are wound on said shaft (8) and covered by a cylindrical housing bearing coaxially on said shaft, wherein the respective ends of said thread extend through radial bores and sleeves (9a) on said housing to the outside, and take on a radial position due to centrifugal force, and further comprising a protective cover (14), **characterized in that** said cylindrical housing is a pipe (9) pivotally mounted on said shaft (8) via a freewheeling mechanism (10), and **in that** said freewheeling mechanism (10) for winding said threads (16) onto said shaft (8) within said pipe (9) being releasable or switchable such that said protective cover (14) is provided externally to the shaft (8) equipped with said thread with said coaxially covering pipe (9), wherein for changing the exit or impact geometry of said threads (16) and their effective area (L) on the crops (E) the protective cover (14) is adjustable, such that substantially vertically (14v) the distance (A) from the pipe (9) and substantially horizontally (14h) the distance (C) between the pipe (9) and the trailing edge (15) of said protective cover (14) can be changed, and/or such that said protective cove (14) being pivotally supported in relation to the rotational axis of said shaft (8) equipped with said thread, so that the position of the trailing edge (15) of said protective cover (14) can be changed for positioning said threads (16) and in relation to the ground surface.

## Revendications

1. Tête de broyage constituée d'un arbre parallèle à la surface du sol (T) et équipé d'une série de fils flexibles (16) espacés les uns des autres, les fils étant bobinés sur l'arbre (8) et étant couverts par un carter cylindrique monté coaxialement sur l'arbre,
dans laquelle les extrémités des fils respectives s'étendent vers l'extérieur à travers d'alésages ou de douilles radiaux sur ledit boîtier et prennent une position radiale lors de la rotation de l'arbre par force centrifuge,
comprenant en outre en un capot protecteur (14),
**caractérisé en ce que** ledit carter cylindrique est un tube (9) qui est monté rotatif sur l'arbre (8) grâce à un mécanisme à roue libre (10),
et **en ce que** ce mécanisme à roue libre (10) est apte à être déverrouillé ou commuté pour enrouler les fils (16) sur l'arbre (8) à l'intérieur du tube (9), **en ce que** le capot protecteur (14) est prévu à l'extérieur de l'arbre (8) muni de fils et du tube (9) qui le recouvre coaxialement, le capot protecteur (14) étant réglable, afin de modifier la géométrie de sortie et d'impact des fils (16) et leur zone d'action (L) sur la végétation (E), de telle sorte que soit réglable en direction sensiblement verticale (14v) la distance (A) du tube (9) et en direction sensiblement horizontale (14h) la distance (C) entre le tube (9) et le bord de sortie (15) du capot protecteur (14),
et/ou **en ce que** le capot protecteur (14) est monté rotatif par rapport à l'axe de rotation de l'arbre (8) muni des fils, de sorte que la position du bord de sortie (15) du capot protecteur (14) est apte à être modifiée relatif à la disposition des fils (16) et par rapport à la surface du sol (T).
